# EUROPÄISCHE PATENTSCHRIFT

(11) **EP 1 594 024 B1**
(45) Veröffentlichungstag und Bekanntmachung des Hinweises auf die Patenterteilung: **16.07.2008**
(21) Anmeldenummer: 04010698.1
(22) Anmeldetag: 05.05.2004
(51) Int. Cl.: G05B 19/042, G05B 23/02

(54) **Analysierung des Lastverhaltens einer Ausgangsschaltung**
Analysis of the behaviour of an output circuit with a load
Analyse du comportement d'un circuit de sortie face à une charge

(43) Veröffentlichungstag der Anmeldung: 09.11.2005
(73) Patentinhaber: SIEMENS AKTIENGESELLSCHAFT, 80333 München (DE)
(72) Erfinder: Wahrbichler, Joachim, 8043 Graz (AT)

(56) Entgegenhaltungen:
- EP-A- 0 404 992
- WO-A-00/28390
- DE-A1- 3 725 530
- DE-A1- 10 059 751
- DE-A1- 19 828 219
- ERMLICH H-J: "ACHEMA '88: SIND SPEICHERPROGRAMMIERBARE STEUERUNGEN NOCH IN?" AUTOMATISIERUNGSTECHNISCHE PRAXIS - ATP, OLDENBOURG VERLAG. MUNCHEN, DE, Bd. 30, Nr. 11, 1. November 1988 (1988-11-01), Seiten 551-557, XP000001946 ISSN: 0178-2320

## Beschreibung

Die Erfindung betrifft ein Verfahren zur Analysierung des Lastverhaltens einer digitalen Ausgangsschaltung, wobei die Ausgangsschaltung über mindestens einen digitalen Ausgang verfügt, welcher über mindestens zwei getrennt ansteuerbare Schaltelemente schaltbar ist.

Solche digitalen Ausgangsschaltungen werden beispielsweise als fehlersichere Peripheriebaugruppen in der industriellen Automatisierungstechnik, insbesondere der Prozessautomatisierung, eingesetzt. Bei solchen fehlersicheren Peripheriebaugruppen dürfen Prozesswerte nur dann ausgegeben werden, wenn der Ausgang auch fehlerfrei ist. Zu diesem Zweck werden üblicherweise die Ausgänge getestet. Dabei werden Testmuster, z.B. so genannte Bitmustertests, aufgeschaltet und über Eingänge zurückgelesen. Die so erhaltenen Werte werden mit einem Sollwert verglichen, wodurch es möglich ist, Fehler zu erkennen. Die Ausführung eines solchen Ausgangs ist dabei abhängig vom gewünschten Sicherheitslevel der Baugruppe. Die zeitlichen Vorgaben der Testmuster beschränken die maximal zulässige kapazitive Last des Ausgangs derart, dass in vielen Applikationen ein zusätzlicher Hardwareaufwand erforderlich ist, um solche Lasten zu beherrschen. Des Weiteren kommt es durch kapazitive Kopplung zwischen Kanälen (z.B. hervorgerufen durch den Kapazitätsbelag einer Leitung) zum Übersprechen. Durch das Übersprechen werden fälschlicherweise vermeintliche Querschlüsse der Kanäle erkannt und entsprechend werden diese Kanäle abgeschaltet. Dies führt häufig zu einem Verfügbarkeitsproblem.

Aus Ermlich, H. J. (1988) Achema '88: Sind speicherprogrammierbare Steuerungen noch in? Automatisierungstechnische Praxis - ATP, Oldenbourg Verlag, München, DE, Bd.30 Nr.11, Seiten 551-557 sind Verfahren zur Analyse der Verfügbarkeit / Sicherheit von Baugruppen inklusive E/A Ebene mit Testroutinen bekannt.

Der Erfindung liegt die Aufgabe zugrunde, mit möglichst geringem Hardwareaufwand kapazitive Lasten und kapazitive Kopplung zwischen Kanälen zu beherrschen.

Diese Aufgabe wird durch die im Anspruch 1 angegebenen Merkmale gelöst.

Das erfindungsgemäße Verfahren zur Analysierung des Lastverhaltens einer digitalen Ausgangsschaltung erlaubt das Beherrschen kapazitiver Lasten und kapazitiver Kopplung ohne einen zusätzlichen Hardwareaufwand. Fehler werden aufgrund der erfassten Daten zweikanalig ermittelt. Kapazitive Kopplung kann mit dem erfindungsgemäßen Verfahren von einem Querschluss unterschieden werden. Beliebige kapazitive Lasten sind beherrschbar. Bisher ist die Verwendung von zusätzlichen Komponenten erforderlich, um kapazitive Lasten zu beherrschen. So wird beispielsweise durch zusätzliche Dioden zwischen Last und Ausgang die Kapazität der Last von der Ausgangsstufe entkoppelt. Damit können jedoch externe P-Schlüsse (Kurzschluss zum positiven Potenzial) nicht erkannt werden. Zudem wird durch die Verlustleistung der Diode der mögliche Ausgangs strom der Baugruppe begrenzt. Auch ein Parallelwiderstand zur kapazitiven Last benötigt Verlustleistung und ermöglicht zudem nicht die Beherrschung von beliebigen kapazitiven Lasten. Eine aktive Entladeschaltung erfordert zusätzlichen Bauteileaufwand auf der Baugruppe, zusätzliche Verlustleistung und ermöglicht auch nicht die Beherrschung beliebiger kapazitiver Lasten.

Gemäß einer vorteilhaften Ausgestaltung der Erfindung ist eine maximale Testzeit parametrierbar. Durch Parametrieren der Testzeit können beliebige kapazitive Lasten beherrscht werden. Die Parametrierung der maximalen Testzeit ist nur von den Prozessanforderungen abhängig. Der Analyseprozess innerhalb dieser maximalen Testzeit ist dynamisch. Durch den dynamischen Analyseprozess wird insbesondere das Abfallen von Lasten beim Dunkeltest verhindert.

Gemäß einer weiteren vorteilhaften Ausgestaltung der Erfindung erfolgt die Ausgabe der Nutzsignale mit einer höheren Priorität als die Ausgabe der Testsignale. Dies ist insbesondere sinnvoll bei einer parametrierten maximalen Testzeit, welche hohe Werte im Verhältnis zur Zykluszeit aufweist. Sollen neue Nutzdaten ausgegeben werden, kann somit der aktuell laufende Test unterbrochen werden und die Nutzdaten ausgegeben werden. Der Test wird erneut nach der längsten parametrierten Rücklesezeit gestartet.

Um die Implementierung des Verfahrens zu vereinfachen, wird vorgeschlagen, gemäß einer vorteilhaften Ausgestaltung der Erfindung die Auswertung der Rücklesesignale und gegebenenfalls die Ausschaltung der Nutzsignale in einer Interruptebene eines Steuerprogramms der Steuereinheit und die Vorgabe von Testsignalen und maximaler Testzeit in einer Ablaufebene des Steuerprogramms durchzuführen.

Die Synchronisation der beiden Steuereinheiten erfolgt vorteilhafterweise über eine serielle Kopplung. Über die serielle Kopplung zwischen den Steuereinheiten können insbesondere die Rücklesesignale übermittelt werden.

Da nur eine begrenzte Anzahl von Signalwechseln vorliegt, kann zur Verringerung des Speicherbedarfs gemäß einer weiteren vorteilhaften Ausgestaltung der Erfindung die Aufzeichnung der Rücklesesignale lauflängen-kodiert erfolgen.

Um die Sicherheit zu erhöhen wird vorgeschlagen, die Rücklesesignale doppelt invers zu übermitteln, d.h. das Rücklesesignal wird sowohl in normaler als auch in inverser Darstellung übermittelt.

Um den Rechenaufwand zu minimieren, wird vorgeschlagen, die Rücklesesignale zu diskreten Zeitpunkten zurückzulesen, und insbesondere die zeitliche Auflösung der Rücklesung zu staffeln. Durch die Staffelung wird der erforderliche Speicherbedarf verringert.

Zur weiteren Erhöhung der Sicherheit können gemäß einer vorteilhaften Ausgestaltung der Erfindung bei Ausgabe von Testsignalen an einem Ausgangspunkt durch Ansteuerung der Schaltelemente durch eine der Steuereinheiten die Rücklesesignale an diesem Ausgangspunkt jeweils durch die andere Steuereinheit rückgelesen werden.

Das erfindungsgemäße Verfahren zur Lastanalyse eignet sich gemäß einer vorteilhaften Ausgestaltung insbesondere für zweikanalige Systeme, bei welchen die Schaltelemente als High-Side- bzw. Low-Side-Schaltelement ausgebildet sind.

Bei mehrkanaligen Ausgangsschaltungen kann vorteilhafterweise jedem Kanal eine eigene parametrierbare maximale Testzeit zugeordnet werden.

Gemäß einer weiteren vorteilhaften Ausgestaltung der Erfindung wird vorgeschlagen, dass im Falle eines Helltests für alle Rücklesesignale die High-Zeit ermittelt wird und im Falle eines Dunkeltests überwacht wird, ob in der parametrierten maximalen Testzeit mindestens einmal ein Low-Signal erkannt wurde. Des Weiteren kann für Hell- und Dunkeltest jeweils eine eigene maximale Testzeit parametrierbar sein.

Nachfolgend wird die Erfindung anhand der in den Figuren dargestellten Ausführungsbeispiele näher beschrieben und erläutert.

### Es zeigen:

- FIG 1: ein Blockschaltbild einer zweikanaligen digitalen Ausgangsschaltung,
- FIG 2: die Zeitverhältnisse bei gestaffelter Auflösung der Rücklesung,
- FIG 3: den Aufbau eines Rücklesesignals,
- FIG 4: typische Zeitverläufe bei der Durchführung eines Verfahrens zur Analysierung des Lastverhaltens einer Ausgangsschaltung,
- FIG 5: Zeitverläufe der Signale bei einem Einschalttest,
- FIG 6: das Signalverhalten bei einem Einschalttest bei kapazitiver Kopplung zweier Kanäle,
- FIG 7: das Signalverhalten bei einem Einschalttest bei einem Querschluss der Kanäle,
- FIG 8: das Zeitverhalten der Signale bei einem Dunkeltest,
- FIG 9: das Signalverhalten bei einem Dunkeltest bei unterschiedlichen kapazitiven Lasten auf den Kanälen,
- FIG 10: das Signalverhalten bei einem Dunkeltest bei unterschiedlichen kapazitiven Lasten der Kanäle, wobei ein Kanal einen externen P-Schluss aufweist,
- FIG 11: das zeitliche Verhalten von Bitmuster-Test und Nutzdatenausgabe und
- FIG 12: das zeitliche Verhalten von Nutzdatenausgabe und Rücklesen.

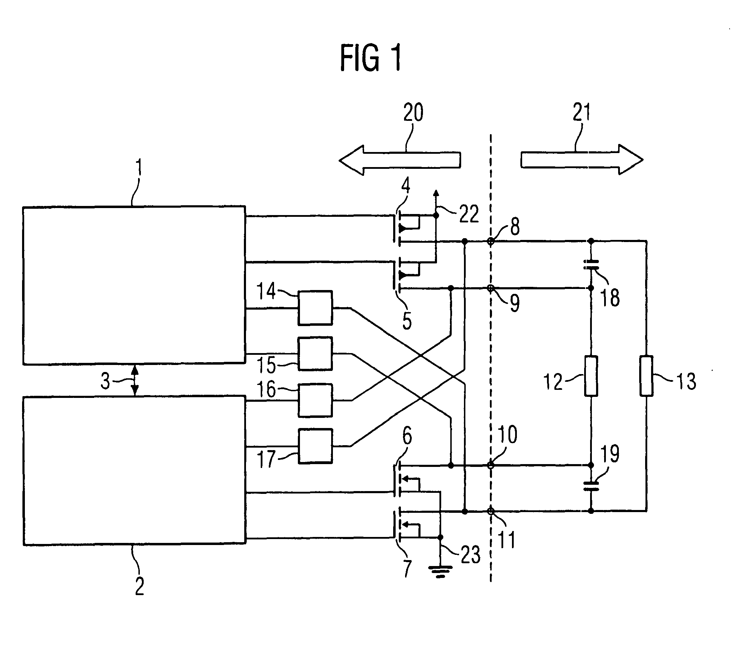

Figur 1 zeigt ein Blockschaltbild einer zweikanaligen Ausgabebaugruppe. Die Ausgabebaugruppe dient zur Ausgabe von digitalen Prozesssignalen an einen Prozess. Der Bereich der Baugruppe ist durch den Pfeil 20, der Bereich des Prozesses durch den Pfeil 21 symbolisiert. Die Schnittstelle zwischen Baugruppe und Prozess sind die Ausgangsklemmen 8 - 11. An diese Ausgangsklemmen sind Lasten 12, 13 anschließbar. Die Baugruppe weist zwei separate Steuereinheiten 1, 2 auf, in diesem Fall Controller, welche durch eine serielle Kopplung 3 gekoppelt sind. Die erste Steuereinheit 1 steuert zwei Schaltelemente 4, 5 an, welche jeweils ein positives Potenzial 22 auf die entsprechende Ausgangsklemme 8 bzw. 9 schalten können. Die zweite Steuereinheit 2 steuert zwei weitere Schaltelemente 6, 7 an, welche jeweils ein Bezugspotenzial 23 auf die entsprechenden Ausgangsklemmen 10 bzw. 11 schalten können. Die Ausgangsstufe der Baugruppe verfügt somit über so genannte High-Side-Schalter (Schaltelemente 4, 5) und Low-Side-Schalter (Schaltelemente 6, 7). Diese werden von den voneinander unabhängigen seriell gekoppelten Steuereinheiten 1, 2 angesteuert. Die an den Ausgängen 8 - 11 ausgegebenen Werte werden über Eingänge 14 - 17 zurückgelesen. Die Rücklesung erfolgt aus Sicherheitsgründen über Kreuz, d.h. die erste Steuereinheit 1 liest die von der zweiten Steuereinheit 2 ausgegebenen Signale zurück und umgekehrt. Mit den Bezugszeichen 18, 19 sind gegebenenfalls vorhandene Koppelkapazitäten zwischen den beiden Kanälen gekennzeichnet.

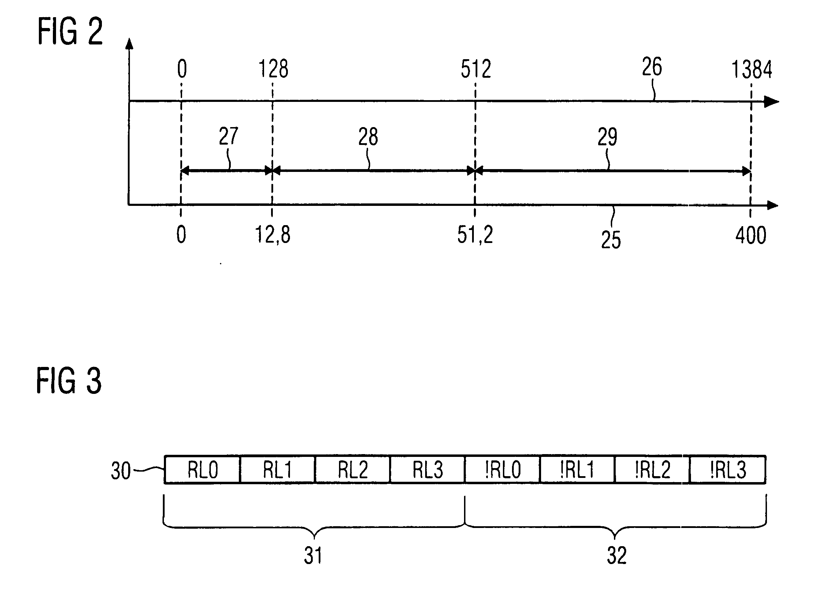

Figur 2 zeigt die Zeitverhältnisse bei gestaffelter Auflösung der Rücklesung. Während Testmuster durch die Steuereinheiten 1, 2 ausgegeben werden, werden im Zeit-Interrupt (z.B. 100 µs) alle Rücklesesignale aufgezeichnet. Die Aufzeichnung erfolgt auf der Steuereinheit, die die Testmuster ausgibt. Da die Steuereinheit, die den Test durchführt, nur die Rücklesesignale der anderen Steuereinheit kennt, werden die fehlenden Rücklesesignale über die serielle Kopplung 3 ausgetauscht. Nach erfolgtem Test werden die aufgezeichneten Werte der anderen Steuereinheit über die Synchronisation mitgeteilt und beide Steuereinheiten führen eine Fehleranalyse durch. Da aus Speichergründen üblicherweise nicht die gesamte Testzeit von 400 ms mit einer Auflösung von 100 µs aufgezeichnet werden kann, wird die Auflösung gestaffelt. In Figur 2 sind mit dem Bezugszeichen 25 die ablaufende Testzeit, mit dem Bezugszeichen 26 der jeweilige Index im Speicherfeld gekennzeichnet. Die Staffelung erfolgt derart, dass in einem ersten Zeitbereich 27 im 100 µs-Raster abgetastet wird, im zweiten Zeitbereich 28 im 200 µs-Raster und im dritten Zeitbereich 29 im 400 µs-Raster. Daraus ergibt sich im dargestellten Fall ein Speicherplatzbedarf von mindestens 1083 Byte.

Alternativ kann die Speicherung der Daten in Form einer Lauflängen-Codierung erfolgen, da nur eine begrenzte Anzahl an Signalwechseln vorliegt. Da hierdurch der Speicherbedarf verringert wird, kann die Aufzeichnung in diesem Fall durchgehend im 100 µs-Raster erfolgen. Es ist jedoch zusätzlicher Rechenaufwand im Interrupt-Handler erforderlich.

Die Synchronisation der Steuereinheiten 1, 2 über die serielle Kopplung 3 erlaubt sowohl einkanaligen auch als zweikanaligen Datenaustausch. Um nicht die Rücklesesignale über die bestehende Synchronisation austauschen zu müssen, (der Aufruf der Synchronisationsfunktionen im Interrupt-Handler und in der Ablaufebene erfordert Kontrollmechanismen) wird die Synchronisation einkanalig betrieben. Der verbleibende Kanal wird für den Austausch der Rücklesesignale verwendet. Die Datenübertragung erfolgt asynchron. Die Rücklesesignale werden doppelt invers versendet, d.h. sowohl in nicht invertierter Darstellung als auch in invertierter Darstellung. Es findet keine Wiederholung bei Übertragungsfehlern statt. Tritt ein Übertragungsfehler auf, wird der inverse Erwartungswert im Speicher-Array abgelegt.

Figur 3 zeigt das Datenformat 30 der Rücklesesignale. In einem ersten Bereich 31 werden die nicht invertierten Rücklesesignale, die über die Eingänge 14 - 17 eingelesen werden, abgelegt, in einem zweiten Bereich 32 werden die gleichen Signale in inverser Darstellung abgelegt.

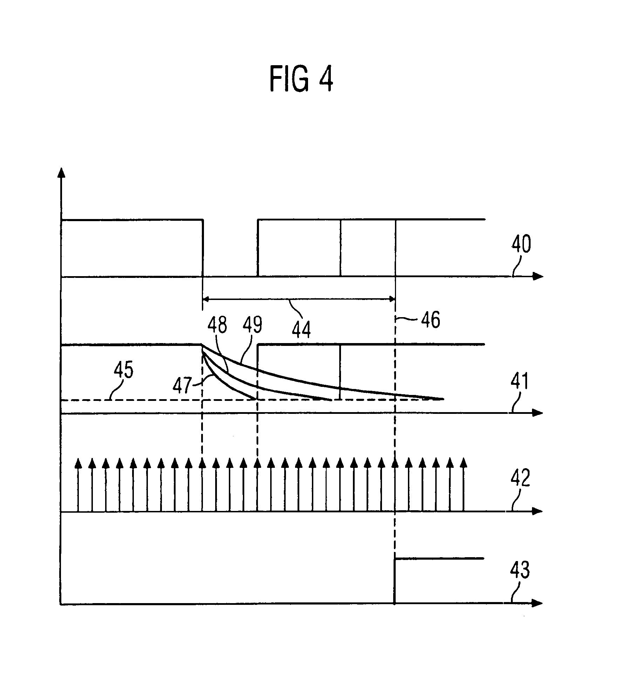

Figur 4 zeigt typische Zeitverläufe bei der Durchführung eines Verfahrens zur Analysierung des Lastverhaltens einer Ausgangsschaltung. Auf der Zeitachse 40 ist das als Testmuster ausgegebene Signal aufgezeichnet. Gegen die Zeitachse 41 sind Rücklesesignale bei verschiedenen kapazitiven Lasten abgebildet. Auf der Zeitachse 42 sind die Zeitpunkte der Abtastung gekennzeichnet und auf der Zeitachse 43 ist ein Signal aufgezeichnet, welches einen Kanalfehler kennzeichnet. Mit dem Bezugszeichen 44 wird der Zeitbereich der parametrierten maximalen Testzeit gekennzeichnet. Die Linie 46 symbolisiert das Ende dieses Zeitbereichs. Zu Beginn der parametrierten Testzeit wird das Signal des Testmusters ausgeschaltet und es wird überwacht, ob das Rücklesesignal ebenfalls einen gewissen Wert 45 (z.B. 8 Volt), hier durch eine gestrichelte Linie symbolisiert, unterschreitet. Bei kleiner kapazitiver Last (Signalverlauf 47) fällt das Rücklesesignal relativ schnell nach Abschaltung des Testsignals ab und wird entsprechend detektiert, sobald der Wert 45 unterschritten wurde. Ab diesem Zeitpunkt können Nutzsignale statt des Testmusters aufgeschaltet werden. Die Zeit bis zur Unterschreitung des Werts 45 verlängert sich bei größeren kapazitiven Lasten am Ausgang (Zeitverlauf 48), wobei auch in diesem Fall das Unterschreiten des Werts 45 innerhalb der parametrierten Testzeit 44 erfolgt und somit kein Fehler detektiert wird, sondern die Nutzsignale aufgeschaltet werden. Lediglich in dem mit dem Signalverlauf 49 gekennzeichneten Fall, dass eine sehr große kapazitive Last nicht innerhalb der parametrierten Testzeit entladen werden kann, wird ein Fehler detektiert, welcher als Kanalfehler 43 angezeigt wird. Ein solcher Kanalfehler führt beispielsweise zum sicherheitsgerichteten Abschalten der Baugruppe bzw. des betroffenen Kanals.

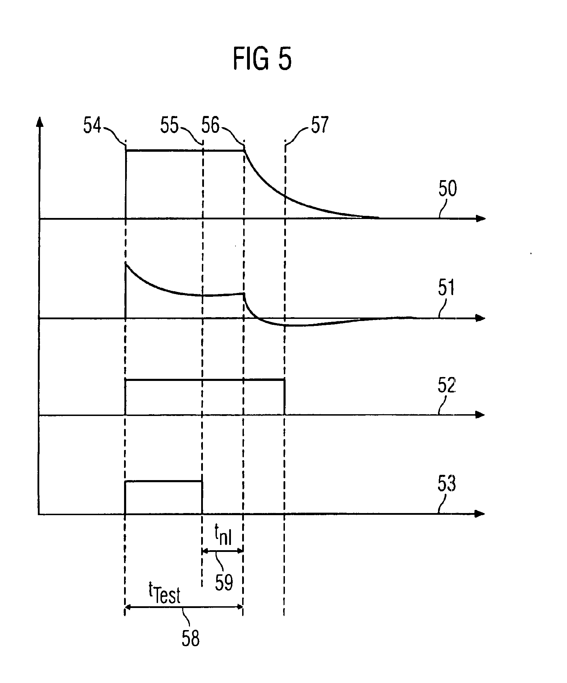

Figur 5 zeigt Zeitverläufe der Signale bei einem Einschalttest. Gegen die Zeitachse 50 ist das Signal eines ersten Kanals aufgezeichnet, welcher den Einschalttest durchführt. Gegen die Zeitachse 51 ist das Signal eines zweiten Kanals aufgezeichnet, welcher ausgeschaltet ist, jedoch mit dem ersten Kanal kapazitiv gekoppelt ist. Gegen die Zeitachsen 52 und 53 sind die entsprechenden Rücklesesignale des ersten bzw. des zweiten Kanals aufgezeichnet. Durch die kapazitive Kopplung zwischen den Kanälen kommt es zu falschen Rücklesesignalen auf dem nicht eingeschalteten Kanal. Um zwischen einem Querschluss zwischen den Kanälen und der kapazitiven Kopplung der Kanäle unterscheiden zu können, wird wie im Folgenden beschrieben vorgegangen. Das Verfahren wird hier am Beispiel von zwei Kanälen gezeigt, lässt sich aber auch bei mehreren Kanälen anwenden. Mit den Bezugszeichen 54 - 57 werden verschiedene Zeitpunkte während des Tests gekennzeichnet. Zum Zeitpunkt 54 wird der Test gestartet. Beide Rücklesesignale gehen aufgrund der kapazitiven Kopplung auf High. Danach baut sich die Spannung am ausgeschalteten Kanal langsam ab, bis im Punkt 55 gültige Rücklesesignale erkannt werden. Man könnte bereits hier die Nutzsignale aufschalten, aber dann könnte man nicht zwischen Querschluss und kapazitiver Kopplung unterscheiden. Daher wird das Testsignal für die Zeitdauer, welche mit dem Bezugszeichen 59 gekennzeichnet ist, aufrecht erhalten. Zum Zeitpunkt 56 werden die Nutzdaten aufgeschaltet und im Zeitpunkt 57 liegt das korrekte Rücklesesignal des mit dem Testsignal geschalteten Kanals vor. Die Dauer 58 des Testsignals ist auf eine maximale Zeit von z.B. 3 ms begrenzt. Die tatsächliche Testzeit für obige Beschaltung ist abhängig von der jeweils vorliegenden kapazitiven Kopplung und wird innerhalb der maximal erlaubten Zeit dynamisch ermittelt.

Durch das ständige Rücklesen der Ausgänge und das Durchführen von Bitmustertests alle 15 Minuten wird ein Zweitfehler, welcher zu einer Hellzeit von 3 ms führt, ausgeschlossen. Diese würde entstehen, wenn der zweite Abschaltweg durchlegiert wäre und zusätzlich das Rücklesesignal fehlerhaft ist.

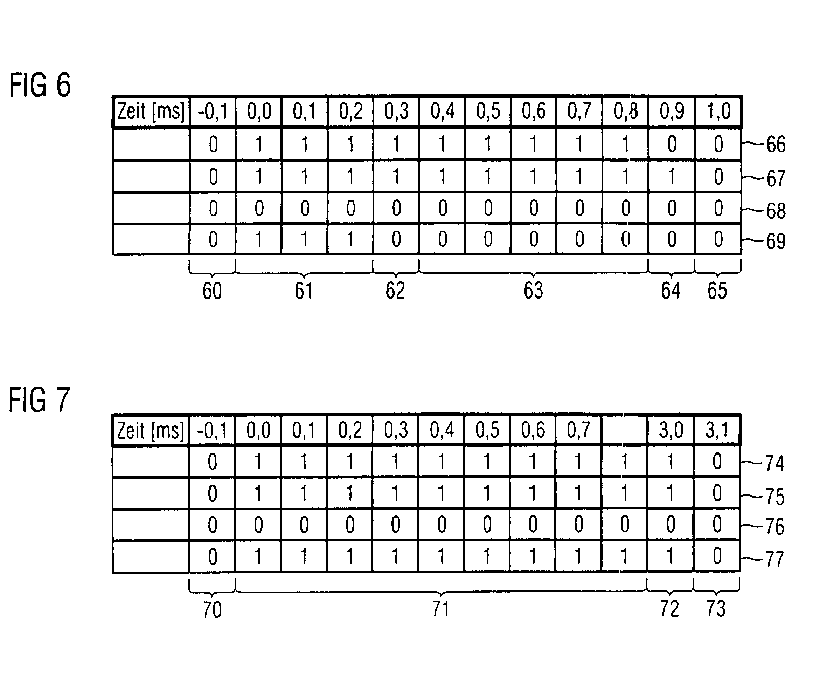

Ist der Test erfolgt, findet eine Analyse der aufgezeichneten Rücklesesignale statt. Dazu wird für alle Rücklesesignale die High-Zeit ermittelt. Bei Vorliegen von kapazitiver Kopplung zwischen den Kanälen ist die High-Zeit vom ausgeschalteten Kanal um die Zeitdauer 59 niedriger als die Testzeit 58. Bei Querschluss ist die High-Zeit vom ausgeschalteten Kanal gleich der maximalen Testzeit. Figur 6 zeigt als Beispiel das Signalverhalten bei einem Einschalttest bei kapazitiver Kopplung zweier Kanäle. In den Zeilen 66 und 68 sind die Sollwerte eines ersten bzw. eines zweiten Kanals wiedergegeben. Die Rücklesesignale des jeweiligen Kanals sind in den Zeilen 67 bzw. 69 wiedergegeben. Im Beispiel gemäß Figur 6 sind beide Kanäle kapazitiv gekoppelt, wobei der erste Kanal einen Einschalttest durchführt, während der zweite Kanal ausgeschaltet bleibt. Nach einem Bereich 60 der Nutzdatenausgabe erfolgt im Bereich 61 die Ausgabe der Bitmustertestsignale. Im Bereich 62 liegen bei beiden Kanälen gültige Rücklesesignale vor. Im Bereich 63 wird für weiteren 500 µs das Testsignal ausgegeben. Im Bereich 64 ist das Rücklesesignal des ersten Kanals High, bedingt durch die kapazitive Last am Ausgang. Im letzten Bereich 65 ist der Test abgeschlossen und sind die Kanäle für die Nutzdatenausgabe freigegeben.

Figur 7 zeigt das Signalverhalten bei einem Einschalttest bei Vorliegen eines Querschlusses zwischen zwei Kanälen. Die Sollwerte der Kanäle sind in den Zeilen 74 und 76 wiedergegeben, die entsprechenden Rücklesesignale in den Zeilen 75 und 77. Nach einem ersten Bereich der Nutzdatenausgabe erfolgt in einem zweiten Bereich 71 die Ausgabe des Bitmustertests. Da ein Querschluss zwischen den Kanälen vorliegt, liegen in diesem Fall während der maximal erlaubten Testzeit keine gültigen Rücklesesignale, wie im Fall der Figur 6, vor. Im Bereich 72 ist die maximale Testzeit erreicht. Im Bereich 73 wird der erste Kanal abgeschaltet und werden entsprechende weitere Maßnahmen eingeleitet, z. B. die sicherheitsgerichtete Abschaltung der Baugruppe bzw. der durch den Querschluss betroffenen Kanäle.

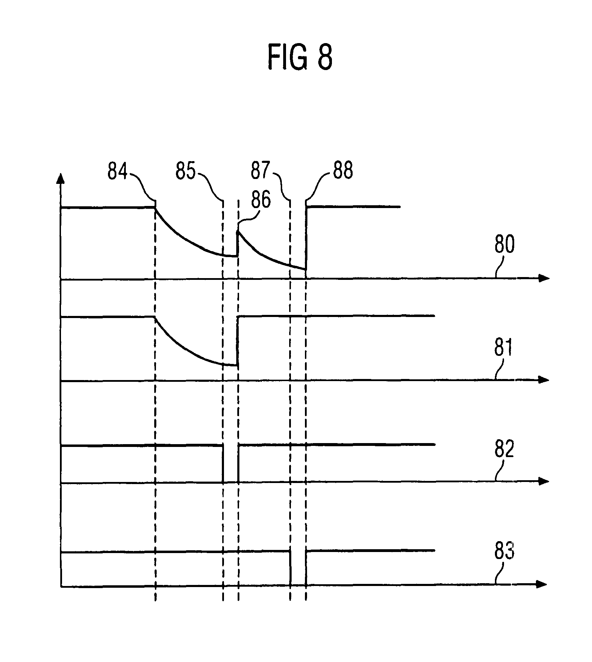

Figur 8 zeigt das Zeitverhalten der Signale bei einem Dunkeltest. Auf den Zeitachsen 80 und 81 sind die Signale eines ersten bzw. eines zweiten Kanals aufgezeichnet. Auf der Zeitachse 82 sind die Rücklesesignale des zweiten Kanals, auf der Zeitachse 83 die Rücklesesignale des ersten Kanals aufgezeichnet. Mit den Bezugszeichen 84 - 88 sind verschiedene Zeitpunkte während des Tests gekennzeichnet. Die kapazitive Last des ersten Kanals ist größer als die des zweiten Kanals. Zwischen den Kanälen besteht zudem eine kapazitive Kopplung. Jeder der Kanäle verfügt über eine eigene parametrierbare Rücklesezeit. Diese Zeit legt die maximale Dauer des Dunkeltests des entsprechenden Kanals fest. Durch die Interrupt-Bearbeitung wird, sobald der richtige Rücklesewert des Kanals erreicht wird, das Nutzsignal aufgeschaltet. Zum Zeitpunkt 84 wird der Dunkeltest gestartet. Die Treiber des jeweiligen Kanals werden abgeschaltet. Durch die unterschiedlichen kapazitiven Lasten entladen sich beide Kanäle unterschiedlich. Im Zeitpunkt 85 liegt das erste gültige Rücklesesignal vom zweiten Kanal an. Im Punkt 86 wird vom Interrupt-Handler das gültige Rücklesesignal erkannt und es werden die Nutzdaten des zweiten Kanals aufgeschaltet. Durch die kapazitive Kopplung der Kanäle kommt es dabei zu einem Spannungsanstieg am ersten Kanal. Im Punkt 87 liegt das erste gültige Rücklesesignal des ersten Kanals an. Im Punkt 88 wird das gültige Rücklesesignal vom Interrupt-Handler erkannt und es werden sofort die Nutzdaten des ersten Kanals aufgeschaltet. Sobald der Test erfolgt ist, findet eine Fehlerauswertung in Form einer Analyse der aufgezeichneten Rücklesesignale statt. Es wird untersucht, ob in der parametrierten Rücklesezeit zumindest einmal ein Low-Signal erkannt wurde.

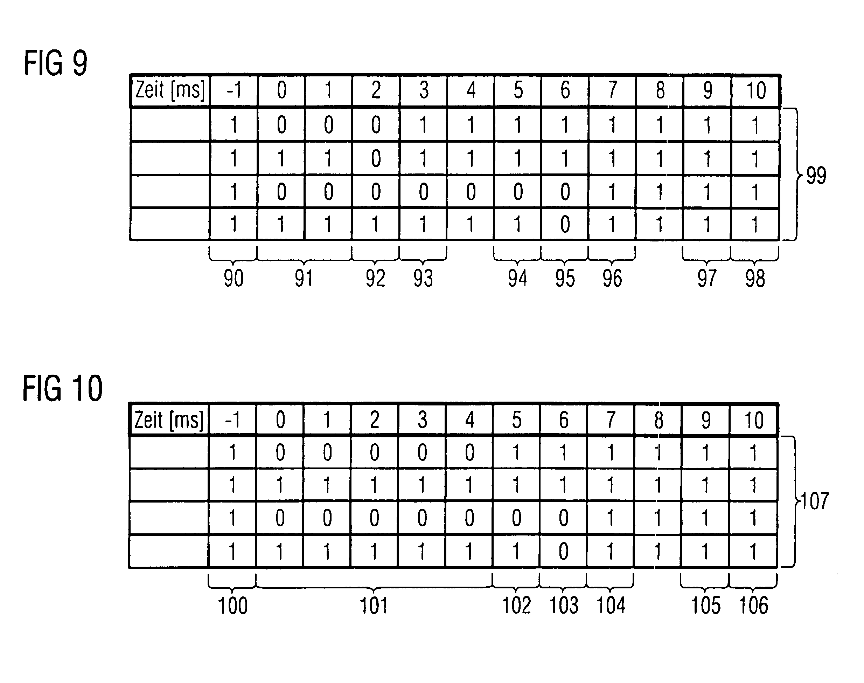

Figur 9 zeigt das Signalverhalten bei einem Dunkeltest bei unterschiedlichen kapazitiven Lasten auf den Kanälen. In den mit dem Bezugszeichen 99 gekennzeichneten Zeilen sind die Sollwerte des ersten Kanals, die Rücklesewerte des ersten Kanals, die Sollwerte des zweiten Kanals sowie die Rücklesesignale des zweiten Kanals aufgezeichnet. Nach einem ersten Bereich 90 der Nutzdatenausgabe beginnt der Dunkeltest im Bereich 91 der Bitmusterausgabe. In diesem Fall führen beide Kanäle einen Dunkeltest durch. Dabei ist die kapazitive Last des ersten Kanals kleiner als die des zweiten Kanals. Die maximale Testzeit des ersten Kanals beträgt 4 ms, die des zweiten Kanals 8 ms. Im gezeigten Beispiel liegt kein Fehler vor. Im Bereich 92 wird ein gültiges Rücklesesignal des ersten Kanals erkannt. Daraufhin werden im Bereich 93 Nutzdaten auf den ersten Kanal aufgeschaltet. Im Bereich 94 erfolgt die Fehlerauswertung des ersten Kanals. Im Bereich 95 liegt ein gültiges Rücklesesignal des zweiten Kanals vor. Daraufhin werden im Bereich 96 Nutzdaten auf den zweiten Kanal aufgeschaltet. Im Bereich 97 erfolgt die Fehlerauswertung des zweiten Kanals. Im Bereich 98 ist der Test abgeschlossen.

Figur 10 zeigt das Signalverhalten bei einem Dunkeltest bei unterschiedlichen kapazitiven Lasten der Kanäle, wobei der erste Kanal einen externen P-Schluss aufweist. Die kapazitive Last des ersten Kanals ist kleiner als die des zweiten Kanals. Beide Kanäle führen einen Dunkeltest durch. Die maximale Testzeit des ersten Kanals beträgt wiederum 4 ms, die des zweiten Kanals 8 ms. Die Soll- und Rücklesewerte der beiden Kanäle sind in den Zeilen 107 entsprechend den Zeilen 99 der Figur 9 aufgezeichnet. Nach einem ersten Bereich 100 der Nutzdatenausgabe erfolgt der Test durch die Bitmusterausgabe im Bereich 101. Im Bereich 102 erfolgt die Fehlerauswertung des ersten Kanals. Im Bereich 103 liegt ein gültiges Rücklesesignal des zweiten Kanals vor. Daraufhin werden im Bereich 104 Nutzdaten auf den zweiten Kanal aufgeschaltet. Im Bereich 105 erfolgt die Fehlerauswertung vom zweiten Kanal. Im Bereich 106 ist der Test abgeschlossen.

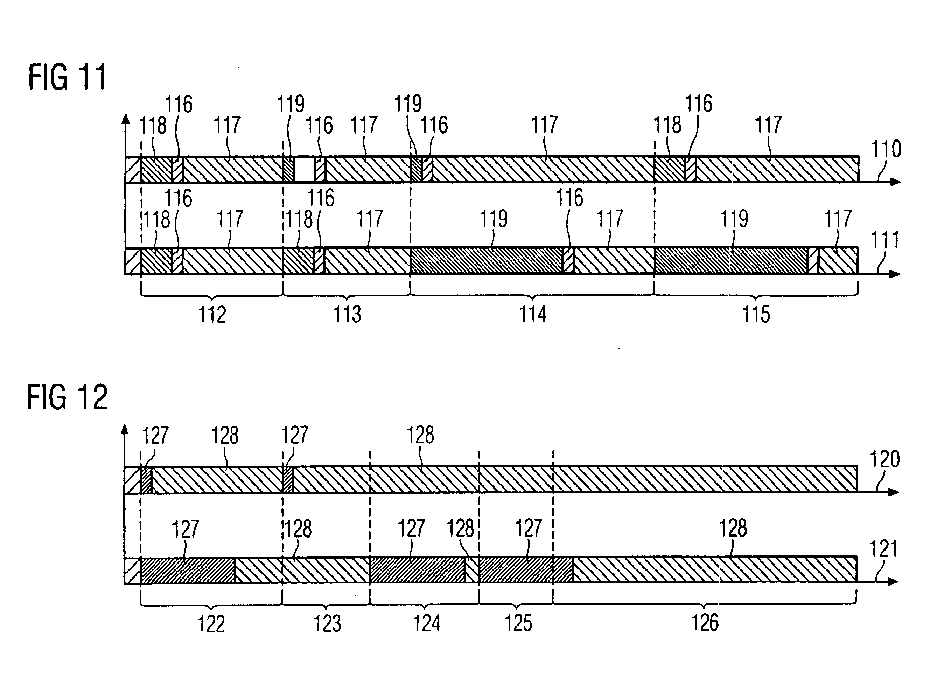

Das zeitliche Verhalten von Bitmustertest und Nutzdatenausgabe wird in den Figuren 11 und 12 anhand von zwei Kanälen gezeigt. Die maximale Testzeit des Dunkeltests des jeweiligen ersten Kanals beträgt 1 ms, des jeweiligen zweiten Kanals 20 ms.

In Figur 11 ist das zeitliche Verhalten eines ersten Kanals gegen die Zeitachse 110, das zeitliche Verhalten eines zweiten Kanals gegen die Zeitachse 111 aufgezeichnet. Es werden jeweils Zeitbereiche der Fehlerauswertung 116, der Nutzdatenausgabe 117, eines Einschalttests 118 sowie eines Dunkeltests 119 unterschieden. Während der Zeitdauer 112 führen der erste Kanal und der zweite Kanal jeweils einen Einschalttest durch. Die Testdauer beträgt maximal 3 ms. Anschließend findet eine Fehlerauswertung statt. Neue Nutzdaten werden erst nach 3 ms wieder aufgeschaltet. Während der Zeitdauer 113 führt der erste Kanal einen Dunkeltest durch und der zweite Kanal einen Einschalttest. Die Testdauer beträgt maximal 3 ms. Anschließend findet wiederum eine Fehlerauswertung statt. Neue Nutzdaten werden erst nach 3 ms wieder aufgeschaltet. Während der Zeitdauer 114 führen beide Kanäle einen Dunkeltest durch. Die Testdauer beträgt beim ersten Kanal maximal 1 ms und beim zweiten Kanal maximal 20 ms. Die Fehlerauswertung findet kanalgranular statt. Neue Nutzdaten werden ebenfalls kanalgranular aufgeschaltet, beim ersten Kanal nach 1 ms, beim zweiten Kanal nach 20 ms. Während der Zeitdauer 115 führt der erste Kanal einen Einschalttest durch und der zweite Kanal einen Dunkeltest. Die Testdauer beträgt für den ersten Kanal maximal 3 ms und für den zweiten Kanal maximal 20 ms. Anschließend findet eine Fehlerauswertung statt. Neue Nutzdaten werden auf den ersten Kanal nach 3 ms und auf den zweiten Kanal nach 20 ms aufgeschaltet. Die angegebenen Zeiten für die Ausgabe der Nutzdaten sind Minimalzeiten. Da die Ausgabe im Baugruppenzyklus erfolgt, kann hierzu noch die Zykluszeit hinzukommen.

Figur 12 zeigt das zeitliche Verhalten von Nutzdatenausgabe und Rücklesen anhand von einem ersten Kanal (Zeitachse 120) und einem zweiten Kanal (Zeitachse 121). Es wird zwischen Zeitbereichen der Fehlerunterdrückung 127 und Zeitbereichen des Rücklesens 128 unterschieden. Während der Zeitdauer 122 werden neue Nutzdaten auf den ersten Kanal und auf den zweiten Kanal aufgeschaltet. Es liegt Fehlerunterdrückung auf dem ersten Kanal für 1 ms und auf dem zweiten Kanal für 20 ms vor. Während der Zeitdauer 123 werden neue Nutzdaten nur auf den ersten Kanal aufgeschaltet und es liegt ein Zeitbereich der Fehlerunterdrückung nur für den ersten Kanal vor. Während der Zeitbereiche 124 und 125 werden nur auf dem zweiten Kanal neue Nutzdaten aufgeschaltet und es findet nur eine Fehlerunterdrückung für den zweiten Kanal statt. Am Anfang der Zeitdauer 126 erfolgt ein Nutzdatenwechsel auf dem zweiten Kanal, obwohl noch kein Rücklesen stattgefunden hat. Dies führt zu einer sicherheitsgerichteten Abschaltung des Kanals.

Zusammengefasst betrifft die Erfindung somit ein Verfahren zur Analysierung des Lastverhaltens einer digitalen Ausgangsschaltung, wobei die Ausgangsschaltung über mindestens einen digitalen Ausgang verfügt, welcher über mindestens zwei getrennt ansteuerbare Schaltelemente 4 - 7 schaltbar ist. Um mit möglichst geringem Hardwareaufwand kapazitive Lasten und kapazitive Kopplung zwischen Kanälen zu beherrschen, wird vorgeschlagen, dass die Schaltelemente 4 - 7 jeweils von einer Steuereinheit 1, 2 angesteuert werden, wobei zum Testen der Ausgangsschaltung während einer Testzeit durch entsprechende Ansteuerung der Schaltelemente 4 - 7 Testsignale an Ausgangspunkten ausgegeben werden, wobei Rücklesesignale an den Ausgangspunkten von den Steuereinheiten 1, 2 über Eingänge 14 -17 der Ausgangsschaltung rückgelesen werden, wobei die Rücklesesignale durch die Steuereinheiten 1, 2 durch Vergleich mit Sollwerten ausgewertet werden, wobei die Ausgabe von Testsignalen abgebrochen wird und Nutzsignale ausgegeben werden sobald die Rücklesesignale mit den Sollwerten übereinstimmen.

## Patentansprüche

1. Verfahren zur Analysierung des Lastverhaltens einer digitalen Ausgangsschaltung, wobei die Ausgangsschaltung über mindestens vier digitale Ausgänge (8 - 11) verfügt, welche über mindestens vier getrennt ansteuerbare Schaltelemente (4 - 7) schaltbar sind, wobei die Schaltelemente (4 - 7) jeweils von einer Steuereinheit (1, 2) angesteuert werden, wobei zum Testen der Ausgangsschaltung während einer Testzeit durch entsprechende Ansteuerung der Schaltelemente (4 - 7) Testsignale an Ausgangspunkten ausgegeben werden, wobei Rücklesesignale an den Ausgangspunkten von den Steuereinheiten (1, 2) über Eingänge (14 -17) der Ausgangsschaltung rückgelesen werden, wobei die Rücklesesignale durch die Steuereinheiten (1, 2) durch Vergleich mit Sollwerten ausgewertet werden, wobei bei Ausgabe von Testsignalen an einem Ausgangspunkt durch Ansteuerung der Schaltelemente (4 - 7) durch eine der Steuereinheiten (1, 2) die Rücklesesignale an diesem Ausgangspunkt jeweils durch die andere Steuereinheit (1, 2) rückgelesen werden,
**dadurch gekennzeichnet,**
**dass** eine maximale Testzeit parametrierbar ist, wodurch beliebige kapazitive Lasten beherrscht werden können, wobei die Parametrierung der maximalen Testzeit nur von den Prozessanforderungen abhängig ist,
wobei die Ausgabe von Testsignalen abgebrochen wird und Nutzsignale ausgegeben werden sobald die Rücklesesignale innerhalb der parametrierten Testzeit mit den Sollwerten übereinstimmen.

2. Verfahren nach Anspruch 1,
**dadurch gekennzeichnet,**
**dass** die Ausgabe der Nutzsignale mit einer höheren Priorität erfolgt als die Ausgabe der Testsignale.

3. Verfahren nach einem der Ansprüche 1 oder 2,
**dadurch gekennzeichnet,**
**dass** die Auswertung der Rücklesesignale und gegebenenfalls die Aufschaltung der Nutzsignale in einer Interruptebene eines Steuerprogramms der Steuereinheit (1, 2) und die Vorgabe von Testsignalen und maximaler Testzeit in einer Ablaufebene des Steuerprogramms erfolgt.

4. Verfahren nach einem der vorhergehenden Ansprüche,
**dadurch gekennzeichnet,**
**dass** die Testsignale Bitmustersignale sind.

5. Verfahren nach einem der vorhergehenden Ansprüche,
**dadurch gekennzeichnet,**
**dass** die Steuereinheiten (1, 2) über eine serielle Kopplung (3) gekoppelt sind.

6. Verfahren nach Anspruch 5,
**dadurch gekennzeichnet,**
**dass** die Rücklesesignale über die serielle Kopplung (3) zwischen den Steuereinheiten (1, 2) übermittelt werden.

7. Verfahren nach einem der vorhergehenden Ansprüche,
**dadurch gekennzeichnet,**
**dass** die Rücklesesignale Lauflängen-kodiert aufgezeichnet werden.

8. Verfahren nach einem der vorhergehenden Ansprüche,
**dadurch gekennzeichnet,**
**dass** die Rücklesesignale doppelt invers übermittelt werden.

9. Verfahren nach einem der vorhergehenden Ansprüche,
**dadurch gekennzeichnet,**
**dass** die Rücklesesignale zu diskreten Zeitpunkten rückgelesen werden.

10. Verfahren nach Anspruch 9,
**dadurch gekennzeichnet,**
**dass** die zeitliche Auflösung der Rücklesung gestaffelt ist.

11. Verfahren nach einem der vorhergehenden Ansprüche,
**dadurch gekennzeichnet,**
**dass** die Schaltelemente (4 - 7) als High-Side- bzw. Low-Side-Schaltelement ausgebildet sind.

12. Verfahren nach einem der vorhergehenden Ansprüche,
**dadurch gekennzeichnet,**
**dass** die Ausgangsschaltung mehrkanalig ist, wobei jedem Kanal eine eigene parametrierbare maximale Testzeit zugeordnet ist.

13. Verfahren nach einem der vorhergehenden Ansprüche,
**dadurch gekennzeichnet,**
**dass** im Falle eines Helltests für alle Rücklesesignale die High-Zeit ermittelt wird.

14. Verfahren nach einem der vorhergehenden Ansprüche,
**dadurch gekennzeichnet,**
**dass** im Falle eines Dunkeltests überwacht wird, ob in der parametrierten maximalen Testzeit mindestens einmal ein Low-Signal erkannt wurde.

15. Verfahren nach einem der vorhergehenden Ansprüche,
**dadurch gekennzeichnet,**
**dass** für Hell- und Dunkeltest jeweils eine eigene maximale Testzeit parametrierbar ist.

## Claims

1. Method for analysing the load characteristics of a digital output circuit, wherein the output circuit has at least four digital outputs (8 - 11) which can be switched via at least four separately controllable switching elements (4 - 7), wherein the switching elements (4 - 7) are in each case controlled by a control unit (1, 2), wherein, for the purpose of testing the output circuit, test signals are output at output points during a test period by corresponding control of the switching elements (4 - 7), wherein readback signals at the output points are read back by the control units (1, 2) via inputs (14 -17) of the output circuit, wherein the readback signals are evaluated by the control units (1, 2) by comparison with reference values, wherein upon output of test signals at an output point, as a result of the switching elements (4 - 7) being controlled by one of the control units (1, 2), the readback signals at said output point are in each case read back by the other control unit (1, 2),
**characterised in that**
a maximum test period can be parameterised, thereby enabling arbitrary capacitive loads to be controlled, with the parameterisation of the maximum test period being dependent only on the process requirements, wherein the output of test signals is interrupted and useful signals are output as soon as the readback signals match the reference values within the parameterised test period.

2. Method according to claim 1,
**characterised in that**
the useful signals are output at a higher priority than the test signals.

3. Method according to one of claims 1 or 2,
**characterised in that**
the readback signals are evaluated and where necessary the useful signals are applied on an interrupt level of a control program of the control unit (1, 2) and test signals and maximum test period are specified on an execution level of the control program.

4. Method according to one of the preceding claims,
**characterised in that**
the test signals are bit pattern signals.

5. Method according to one of the preceding claims,
**characterised in that**
the control units (1, 2) are linked by way of a serial coupling (3).

6. Method according to claim 5,
**characterised in that**
the readback signals are transmitted between the control units (1, 2) by way of the serial coupling (3).

7. Method according to one of the preceding claims,
**characterised in that**
the readback signals are recorded using run-length coding.

8. Method according to one of the preceding claims,
**characterised in that**
the readback signals are transmitted in double inverse fashion.

9. Method according to one of the preceding claims,
**characterised in that**
the readback signals are read back at discrete instants.

10. Method according to claim 9,
**characterised in that**
the time resolution of the readback is staggered.

11. Method according to one of the preceding claims,
**characterised in that**
the switching elements (4 - 7) are embodied as high-side or low-side switching elements.

12. Method according to one of the preceding claims,
**characterised in that**
the output circuit is multi-channel, with each channel being assigned its own parameterisable maximum test period.

13. Method according to one of the preceding claims,
**characterised in that**
in the case of a light test the High time is determined for all the readback signals.

14. Method according to one of the preceding claims,
**characterised in that**
in the case of a dark test it is monitored whether a Low signal was detected at least once in the parameterised maximum test period.

15. Method according to one of the preceding claims,
**characterised in that**
a separate maximum test period can be parameterised in each case for the light and the dark test.

## Revendications

1. Procédé pour l'analyse du comportement en charge d'un circuit de sortie numérique, dans lequel le circuit de sortie dispose d'au moins quatre sorties numériques (8 à 11) qui peuvent être commutées par l'intermédiaire d'au moins quatre éléments commutateurs (4 à 7) commandables séparément, les éléments commutateurs (4 à 7) sont commandés à chaque fois par une unité de commande (1, 2), pour tester le circuit de sortie pendant un temps de test, des signaux de test sont fournis à des points de sortie par une commande correspondante des éléments commutateurs (4 à 7), des signaux de relecture sont relus aux points de sortie par les unités de commande (1, 2) par l'intermédiaire d'entrées (14 à 17) du circuit de sortie, les signaux de relecture sont évalués par les unités de commande (1, 2) par comparaison avec des valeurs de consigne, lors de la fourniture de signaux de test à un point de sortie par la commande des éléments commutateurs (4 à 7) par l'une des unités de commande (1, 2), les signaux de relecture sont relus à ce point de sortie à chaque fois par l'autre unité de commande (1, 2),
**caractérisé par le fait que**
un temps de test maximal est paramétrable, ce qui fait que des charges capacitives quelconques peuvent être maîtrisées, le paramétrage du temps de test maximal étant dépendant seulement des exigences du processus, la fourniture de signaux de test étant interrompue et des signaux utiles étant fournis dès que les signaux de relecture à l'intérieur du temps de test paramétré coïncident avec les valeurs de consigne.

2. Procédé selon la revendication 1,
**caractérisé par le fait que**
la fourniture des signaux utiles s'effectue avec une priorité supérieure à celle de la fourniture des signaux de test.

3. Procédé selon l'une des revendications 1 ou 2,
**caractérisé par le fait que**
l'évaluation des signaux de relecture et le cas échéant l'application des signaux utiles dans un niveau d'interruption d'un programme de commande de l'unité de commande (1, 2) ainsi que la prescription de signaux de test et du temps de test maximal s'effectuent dans un niveau d'exécution du programme de commande.

4. Procédé selon l'une des revendications précédentes,
**caractérisé par le fait que**
les signaux de test sont des signaux de configuration binaire.

5. Procédé selon l'une des revendications précédentes,
**caractérisé par le fait que**
les unités de commande (1, 2) sont reliées par l'intermédiaire d'une liaison sérielle (3).

6. Procédé selon la revendication 5,
**caractérisé par le fait que**
les signaux de relecture sont transmis par l'intermédiaire de la liaison sérielle (3) entre les unités de commande (1, 2).

7. Procédé selon l'une des revendications précédentes,
**caractérisé par le fait que**
les signaux de relecture sont enregistrés avec un codage par longueur de plage.

8. Procédé selon l'une des revendications précédentes,
**caractérisé par le fait que**
les signaux de relecture sont transmis doublement inversés.

9. Procédé selon l'une des revendications précédentes,
**caractérisé par le fait que**
les signaux de relecture sont relus à des instants discrets.

10. Procédé selon la revendication 9,
**caractérisé par le fait que**
la résolution temporelle de la relecture est différenciée.

11. Procédé selon l'une des revendications précédentes,
**caractérisé par le fait que**
les éléments commutateurs (4 à 7) sont conçus comme des éléments commutateurs côté haute tension ou côté basse tension.

12. Procédé selon l'une des revendications précédentes,
**caractérisé par le fait que**
le circuit de sortie est à plusieurs canaux, un temps de test maximal paramétrable particulier étant associé à chaque canal.

13. Procédé selon l'une des revendications précédentes,
**caractérisé par le fait que**,
dans le cas d'un test dit clair, pour tous les signaux de relecture, on détermine le temps d'état haut.

14. Procédé selon l'une des revendications précédentes,
**caractérisé par le fait que**,
dans le cas d'un test dit sombre, on surveille si, dans le temps de test maximal paramétré, un signal bas a été détecté au moins une fois.

15. Procédé selon l'une des revendications précédentes,
**caractérisé par le fait que**
un temps de test maximal particulier peut être paramétré respectivement pour le test clair et pour le test sombre.
